# EUROPÄISCHE PATENTSCHRIFT

(11) **EP 2 209 594 B1**
(45) Veröffentlichungstag und Bekanntmachung des Hinweises auf die Patenterteilung: **12.01.2011**
(21) Anmeldenummer: 08839152.9
(22) Anmeldetag: 13.10.2008
(51) Int. Cl.: B25D 11/06, F16C 19/16, F16H 23/00, F16C 33/58

(54) **WÄLZLAGERUNG**
ANTI-FRICTION BEARING
PALIER A ROULEMENT

(30) Priorität: 16.10.2007 DE 102007049738
(43) Veröffentlichungstag der Anmeldung: 28.07.2010
(73) Patentinhaber: AB SKF, 415 50 Göteborg (SE)
(72) Erfinder: NÖTH, Mathias, 97535 Wasserlosen (DE); KAISER, Tristan, 97422 Schweinfurt (DE)
(74) Vertreter: Kohl, Thomas
(86) Internationale Anmeldenummer: PCT/EP2008/008640
(87) Internationale Veröffentlichungsnummer: WO 2009/049843

(56) Entgegenhaltungen:
- EP-A- 1 716 980
- EP-A- 1 750 010
- DE-C1- 3 400 634
- FR-A- 2 557 937
- US-A- 3 558 201

## Beschreibung

Die Erfindung betrifft eine Wälzlagerung für wenigstens einen Satz ringartig angeordneter Wälzkörper mit wenigstens einem Laufbahnelement mit einer Laufbahn, auf der die Wälzkörper zum Abrollen vorgesehen sind.

Beispielsweise aus der DE 34 00 679 A1 ist eine Kugellageranordnung für ein Taumelgetriebe bekannt, bei dem sozusagen ein normales Rillenkugellager zum Einsatz kommt, wobei lediglich die Bohrung des Lagerinnenrings gegenüber einem Außenmantel des Kugellagerinnenrings schräg ausgebildet ist.

Eine Aufgabe der vorliegenden Erfindung ist es, demgegenüber eine verbesserte Wälzlagerung zu schaffen.

Die Aufgabe wird durch den Gegenstand des Patentanspruchs 1 gelöst. Vorteilhafte Ausgestaltungen sind in den Unteransprüchen beschrieben.

Gemäß Anspruch 1 beinhaltet eine Wälzlagerung für wenigstens einen Satz ringartig angeordneter Wälzkörper mit wenigstens einem Laufbahnelemente mit einer Laufbahn, auf der die Wälzkörper zum Abrollen vorgesehen sind, folgende Merkmale:
- Die Laufbahn umfasst einen Laufbahngrund mit kreisförmiger Umfangslinie,
- axial beiderseits des Laufbahngrunds umfasst das Laufbahnelement für die Wälzkörper jeweils eine Schulter oder einen Bord mit kreisförmiger Umfangslinie,
- das Laufbahnelement ist derart ausgebildet, dass bei Betrachtung senkrecht zu den von den Umfangslinien aufgespannten Flächen alle Mittelpunkte der drei Umfangslinien voneinander unterschiedlich sind, und
- das Laufbahnelement ist zum Drehen um eine Drehachse vorgesehen, die zu den Flächen eine Schrägstellung aufweist, so dass die Fläche des Laufbahngrunds bezüglich der Drehachse zum Ausführen einer Taumelbewegung vorgesehen ist.

Die Erfindung beruht dabei auf der Erkenntnis, dass bei einer Kugellageranordnung gemäß der eingangs beschriebenen DE 34 00 679 A1 beim typischen Fall eines Taumelgetriebes, bei dem insbesondere an einer Umfangsstelle des Außenrings der Kugellageranordnung eine Kraft in axialer Richtung zu übertragen ist, die Ausbildung der beiden Laufbahnelemente mit zueinander konzentrischen Laufbahngrund und Schultern suboptimal ist, da insbesondere die Krafteinwirkung auf die Schulterbereiche in Abhängigkeit von der Verdrehposition der Kugellageranordnung, bezogen auf besagten Kraftübertragungspunkt, ganz unterschiedlich ist. Bei einem andern Taumellagen gemäβ EP1716980 ist der Schulterbereich der Innen - und/oder Außenlaufbahnen, der auf der am stänksten belasteten seite der Laufbahn liegt, vergröβert. Laufbahngund und Schultern der beiden Laufbahnelemente sind zueinander konzentrisch. Dem wird nunmehr gemäß der Erfindung damit entgegengetreten, dass das Laufbahnelement derart ausgebildet ist, dass bei Betrachtung senkrecht zu den von den Umfangslinien vom Laufbahngrund und den Schultern bzw. dem Bord aufgespannten Flächen alle Mittelpunkte besagter drei Umfangslinien voneinander unterschiedlich, also sozusagen die Umfangslinien zueinander exzentrisch sind. Mit der vorliegenden Erfindung lassen sich dabei bei vergleichbarer Bauraumausnutzung und vergleichbarer Belastungssituation wie beim Stand der Technik nicht nur leicht verbesserte, sondern deutlich höhere Lebenszeiten der Wälzlagerung erzielen, was in der Wälzlagertechnik einem Quantensprung gleich kommt.

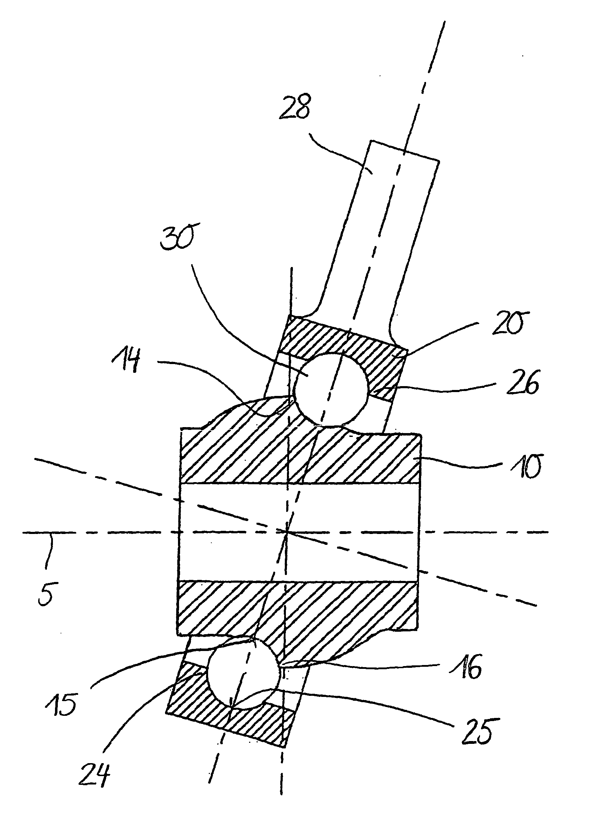

Weitere Vorteile, Merkmale und Einzelheiten der Erfindung ergeben sich aus dem im Folgenden beschriebenen Ausführungsbeispiel der Erfindung anhand der Figur.

Die Figur zeigt als ein Ausführungsbeispiel der Erfindung einen Längsschnitt durch eine Wälzlagerung gemäß der Erfindung. Die Wälzlagerung umfasst dabei ein inne-res Laufbahnelement 10 und ein äußeres Laufbahnelement 20, zwischen denen ein Satz ringartig angeordneter, als Kugeln 30 ausgebildeter Wälzkörper angeordnet sind, wobei die Kugeln 30 in einem nicht dargestellten Käfig angeordnet sein können. Dabei ist das innere Laufbahnelement 10 derart ausgebildet, dass bei einem Drehen des inneren Laufbahnelements 10 um die Drehachse 5 die von einer Umfangslinie eines Laufbahngrunds 15 für die Kugeln 30 aufgespannten Fläche eine Taumelbewegung um besagte Drehachse 5 ausführt.

Diese Taumelbewegung wird entsprechend auf das äußere Laufbahnelement 20 übertragen. Dabei ist an einer Umfangsstelle am Außenmantel des äußeren Laufbahnelements 20 durch Reibschweißen ein Zapfen 28 angeordnet, mit dem in Richtung der Drehachse 5 die durch die Taumelbewegung verursachte Hin- und Herbewegung des Zapfens 28 auf ein weiteres Bauelement übertragen wird, beispielsweise im Rahmen eines Bohrhammers oder Meißelhammers. Durch das Reibschweißen des Zapfens 28 an den Außenmantel des äußeren Laufbahnelements 20 werden aufwändigere Herstellungsverfahren, beispielsweise ein Herausschneiden des Zapfens 28, mit Vorteil vermieden.

Beide Laufbahnelemente 10 und 20 sind dabei mit einem Laufbahngrund 15 und 25 für die Kugeln 30 und mit beiderseits des Laufbahngrunds 15 und 25 angeordneten Schultern 14 und 16 sowie 24 und 26 ausgebildet. Dabei sind je Laufbahnelement 10 und 20 die kreisförmigen Umfangslinien des Laufbahngrunds 15 und 25 sowie der beiden Schultern 14 und 16 bzw. 24 und 26, bei senkrechter Betrachtung der von den Umfangslinien aufgespannten, zueinander planparallelen Flächen, alle Mittelpunkte der drei Umfangslinien voneinander unterschiedlich. Damit werden insbesondere die bei der Taumelbewegung auftretenden Kräfte in axialer Richtung von einem immer ausreichend hoch bemessenen Schulterbereich der Laufbahnelemente 10 und 20 aufgenommen und übertragen.

In der Figur ist dabei eine maximale Schrägstellung des Laufbahngrundes 15 des inneren Laufbahnelements 10 dargestellt. Dabei sind die beiden Schultern 14 und 16 des inneren Laufbahnelements 10 derart ausgebildet, dass ihre Umfangslinien diese maximale Schrägstellung beispielsweise um 10° vor- oder nacheilend früher oder später erreichen, wobei dies von den jeweiligen Einsatzbedingungen der Wälzlagerung abhängt. In anderen Ausführungsformen kann das Voraus- oder Nacheilen auch größer oder kleiner 10° sein oder die Laufbahnelemente auch derart ausgebildet sein, dass der Laufbahngrund und die Schultern besagte maximale Schrägstellung gleichzeitig erreichen. Entscheidend ist dabei aber immer das durch die Einbauumgebung und den Verwendungszweck vorgegebene Kraftanforderungsprofil in Abhängigkeit von der Verdrehposition der Wälzlagerung.

Das äußere Laufbahnelement 20 ist entsprechend dem inneren ausgebildet. Bei dem äußeren Laufbahnelement 20 kann der vorausgehend für das innere Laufbahnelement 10 beschriebene Sachverhalt des Vor- oder Nacheilens der Schultern 24 und 26 auch einfacher dadurch beschrieben werden, dass die Mittelpunkte der Umfangslinien beider Schultern 24 und 26 bezüglich einer Geraden abseits liegen, die durch den Mittelpunkt der Umfangslinie des Laufbahngrundes 25 des äußeren Laufbahn-elements 20 und dem Anbindungspunkt für den Zapfen 28 verläuft.

In einer Ausführungsform sind die Laufbahnelemente 10 und 20 insbesondere aus einem Einsatzstahl mit vergleichsweise hohem Nickelanteil ausgebildet. In anderen Ausführungsformen kann das innere Laufbahnelement 10 beispielsweise auch zweistückig ausgebildet sein, indem Laufbahngrund 15 und Schultern 14 und 16 ähnlich dem äußeren Laufbahnelement ausgebildet sind und dieses dann in ein zweites Stück entsprechend eingesetzt ist.

Schlagwortartig zusammengefasst kann man die vorausgehend beschriebene Wälzlageranordnung auch als ein druckpunktoptimiertes Taumellager beschreiben.

## Patentansprüche

1. Wälzlagerung für wenigstens einen Satz ringartig, angeordneter Wälzkörper (30) mit wenigstens einem Laufbalmelement (10, 20) mit einer Laufbahn, auf der die Wälz-körper (30) zum Abrollen vorgesehen sind, beinhaltend folgende Merkmale:
- Die Laufbahn umfasst einen Laufbahngrund (15, 25) mit kreisförmiger Umfangslinie,
- axial beiderseits des Laufbahngrunds (15, 20) umfasst das Laufbahnelement (10, 20) für die Wälzkörper (30) jeweils eine Schulter (14, 16 ; 24, 26) oder einen Bord mit kreisförmiger Umfangslinie, und - das Laufbahnelement (10,20) ist zum Drehen um eine Drehachse (5) vorgesehen, die zu den Flächen eine Schrägstellung aufweist, so dass die Fläche des Lauf- bahngrunds (15,25) bezüglich der Drehachse (5) zum Ausführen einer Taumelbewegung vorgesehen ist,
**dadurch gekennzeichnet, dass**
- das Laufbahnelement (10, 20) derart ausgebildet ist, dass bei Betrachtung senkrecht zu den von den Umfangslinien aufgespannten Flächen alle Mittelpunkte der drei Umfangslinien voneinander unterschiedlich sind.

2. Wälzlagerung nach Anspruch 1, wobei bei seitlicher Betrachtung der Drehach-se (5) die Taumelbewegung der Fläche des Laufbahngrunds (15, 25) durch zwei Endlagen mit maximaler Schrägstellung bezüglich der Drehachse (5) **gekennzeichnet** ist, und das Laufbahnelement (10, 20) derart ausgebildet ist, dass Endlagen der Flächen der Schultern (14, 15; 24, 26) Borde, verglichen mit den Endlagen der Fläche des Laufbahngrunds (15, 25) um einen vorgebbaren Winkel voraus- oder nacheilend erreicht werden.

3. Wälzlagerung nach Anspruch 2, wobei die Endlagen der Flächen der beiden Schultern (14, 16; 24, 26) Borde voneinander unterschiedlich sind.

4. Wälzlagerung nach einem der Ansprüche 1 bis 3, wobei die Mittelpunkte der Umfangslinien beider Schulter (14, 16; 24, 26) oder Borde bezüglich einem Mittelpunkt der Umfangslinie des Laufbahngrundes (15, 25) punksymmetrisch angeordnet sind.

5. Wälzlagerung nach einem der Ansprüche 1 bis 4, wobei die Wälzlagerung wenigstens zwei Laufbahnelemente (10, 20) umfasst, zwischen denen die Wälzkörper (30) angeordnet sind, und die Laufbahnelemente (10, 20) einander entsprechend ausgebildet sind.

6. Wälzlagerung nach einem der Ansprüche 1 bis 5, wobei wenigstens ein Umfangsbereich eines der Laufbahnelemente (20) zum Kraftübertragen auf wenigstens ein weiteres Bauelement vorgesehen ist.

7. Wälzlagerung nach Anspruch 6, wobei das Laufbahnelement (20) in besagtem Umfangsbereich einen Fortsatz (28) umfasst.

8. Wälzlagerung nach Anspruch 7, wobei der Fortsatz (28) durch ein Reibschweißen befestigt ist.

9. Wälzlagerung nach einem der Ansprüche 6 bis 8, wobei die Mittelpunkte der Umfangslinien beider Schultern (24, 26) oder Borde bezüglich einer Geraden abseits liegen, die durch den Mittelpunkt besagten Umfangsbereichs und den Mittelpunkt der Umfangslinie des Laufbahngrundes (25) verläuft.

10. Wälzlagerung nach einem der Ansprüche 1 bis 9, wobei die Wälzkörper (30) als Kugeln ausgebildet sind.

## Claims

1. Anti-friction bearing for at least one set of annularly arranged rolling bodies (30) having at least one raceway element (10, 20) with a raceway, on which the rolling bodies (30) are provided for rolling, containing the following features:
- the raceway comprises a raceway base (15, 25) with a circular peripheral line,
- axially on both sides of the raceway base (15, 25), the raceway element (10, 20) comprises in each case one shoulder (14, 16; 24, 26) or a rim with a circular peripheral line for the rolling bodies (30), and
- the raceway element (10, 20) is provided for rotation about a rotational axis (5) which has an oblique position with respect to the surfaces, with the result that the surface of the raceway base (15, 25) is provided for performing a tumbling movement with regard to the rotational axis (5), **characterized in that**
- the raceway element (10, 20) is configured in such a way that, if viewed perpendicularly with respect to the surfaces defined by the peripheral lines, all the centre points of the three peripheral lines are different from one another.

2. Anti-friction bearing according to Claim 1, the tumbling movement of the surface of the raceway base (15, 25) being **characterized by** two end positions with a maximum oblique position with regard to the rotational axis (5) if the rotational axis (5) is viewed from the side, and the raceway element (10, 20) being configured in such a way that end positions of the surfaces of the shoulders (14, 16; 24, 26) or rims, compared with the end positions of the surface of the raceway base (15, 25), are reached in a manner which leads or trails by a predefinable angle.

3. Anti-friction bearing according to Claim 2, the end positions of the surfaces of the two shoulders (14, 16; 24, 26) or the rims being different from one another.

4. Anti-friction bearing according to one of Claims 1 to 3, the centre points of the peripheral lines of both shoulders (14, 16; 24, 26) or rims being arranged in a point-symmetrical manner with regard to a centre point of the peripheral line of the raceway base (15, 25).

5. Anti-friction bearing according to one of Claims 1 to 4, the anti-friction bearing comprising at least two raceway elements (10, 20), between which the rolling bodies (30) are arranged, and the raceway elements (10, 20) being configured to correspond to one another.

6. Anti-friction bearing according to one of Claims 1 to 5, at least one peripheral region of one of the raceway elements (20) being provided for transmitting force to at least one further component.

7. Anti-friction bearing according to Claim 6, the raceway element (20) comprising a projection (28) in the said peripheral region.

8. Anti-friction bearing according to Claim 7, the projection (28) being fastened by a rotary friction weld.

9. Anti-friction bearing according to one of Claims 6 to 8, the centre points of the peripheral lines of both shoulders (24, 26) or rims lying to the side with regard to a straight line which runs through the centre point of the said peripheral region and the centre point of the peripheral line of the raceway base (25).

10. Anti-friction bearing according to one of Claims 1 to 9, the rolling bodies (30) being configured as balls.

## Revendications

1. Palier à roulement pour au moins un jeu de corps de roulement (30) disposés en anneau, avec au moins un élément de piste de roulement (10, 20) avec une piste de roulement, sur laquelle il est prévu que les corps de roulement (30) puissent rouler, comportant les caractéristiques suivantes:
- la piste de roulement comprend un fond de piste de roulement (15, 25) présentant un contour circulaire,
- axialement de part et d'autre du fond de piste de roulement (15, 25), l'élément de piste de roulement (10, 20) comporte pour les corps de roulement (30) chaque fois un épaulement (14, 16; 24, 26) ou un bord présentant un contour circulaire, et
- l'élément de piste de roulement (10, 20) est prévu pour tourner autour d'un axe de rotation (5), qui présente une position inclinée par rapport aux surfaces, de telle manière que la surface du fond de piste de roulement (15, 25) par rapport à l'axe de rotation (5) soit prévue pour effectuer un mouvement de nutation,
**caractérisé en ce que**
- l'élément de piste de roulement (10, 20) est réalisé de telle manière que, lorsque l'on regarde perpendiculairement aux surfaces embrassées par les contours, tous les centres des trois contours soient différents l'un de l'autre.

2. Palier à roulement selon la revendication 1, dans lequel, en regardant latéralement l'axe de rotation (5)., le mouvement de nutation de la surface du fond de piste de roulement (15, 25) est **caractérisé par** deux positions terminales en situation d'inclinaison maximale par rapport à l'axe de rotation (5) et l'élément de piste de roulement (10, 20) est réalisé de telle manière que les positions terminales des surfaces des épaulements (14, 16; 24, 26) ou des bords, par comparaison avec les positions terminales de la surface du fond de piste de roulement (15, 25), soient atteintes en avance ou en retard d'un angle pouvant être prédéterminé.

3. Palier à roulement selon la revendication 2, dans lequel les positions terminales des surfaces des deux épaulements (14, 16; 24, 26) ou bords sont différentes l'une de l'autre.

4. Palier à roulement selon l'une quelconque des revendications 1 à 3, dans lequel les centres des contours des deux épaulements (14, 16; 24, 26) ou bords sont disposés avec une symétrie ponctuelle par rapport à un centre du contour du fond de piste de roulement (15, 25).

5. Palier à roulement selon l'une quelconque des revendications 1 à 4, dans lequel le palier à roulement comprend au moins deux éléments de piste de roulement (10, 20) entre lesquels les corps de roulement (30) sont placés, et les éléments de piste de roulement (10, 20) sont réalisés en correspondance l'un avec l'autre.

6. Palier à roulement selon l'une quelconque des revendications 1 à 5, dans lequel il est prévu au moins une zone périphérique d'un des éléments de piste de roulement (20) pour la transmission de forces à au moins un autre élément de construction.

7. Palier à roulement selon la revendication 6, dans lequel l'élément de piste de roulement (20) présente un prolongement (28) dans ladite zone périphérique.

8. Palier à roulement selon la revendication 7, dans lequel le prolongement (28) est fixé par soudage par friction.

9. Palier à roulement selon l'une quelconque des revendications 6 à 8, dans lequel les centres des contours des deux épaulements (24, 26) ou bords sont situés à l'écart par rapport à une droite, qui passe par le centre de ladite zone périphérique et par le centre du contour du fond de piste de roulement (25).

10. Palier à roulement selon l'une quelconque des revendications 1 à 9, dans lequel les corps de roulement (30) se présentent sous la forme de billes.
